# EUROPEAN PATENT SPECIFICATION

(11) **EP 1 728 376 B1**
(45) Date of publication and mention of the grant of the patent: **15.07.2009**
(21) Application number: 05729217.9
(22) Date of filing: 18.03.2005
(51) Int. Cl.: H04L 29/06

(54) **METHOD, APPARATUSES AND COMPUTER PROGRAM PRODUCT FOR SHARING CRYPTOGRAPHIC KEY WITH AN EMBEDDED AGENT ON A NETWORK ENDPOINT IN A NETWORK DOMAIN**
VERFAHREN, VORRICHTUNGEN UND COMPUTERPROGRAMMPRODUKT ZUM GEMEINSAMEN BENUTZEN EINES KRYPTOGRAPHISCHEN SCHLÜSSELS MIT EINEM EINGEBETTETEN AGENTEN AUF EINEM NETZWERKENDPUNKT IN EINER NETZWERKDOMÄNE
PROCEDE, DISPOSITIFS ET PRODUIT DE PROGRAMME INFORMATIQUE PERMETTANT DE PARTAGER UNE CLE CRYPTOGRAPHIQUE AVEC UN AGENT INTEGRE SUR UN POINT LIMITE DE RESEAU DANS UN DOMAINE DE RESEAU

(30) Priority: 24.03.2004 US 809315
(43) Date of publication of application: 06.12.2006
(73) Proprietor: Intel Corporation, Santa Clara, CA 95052 (US)
(72) Inventor: DURHAM, David, Hillsboro, OR 97124 (US); ZIMMER, Vincent, Federal Way, WA 98003 (US); SMITH, Carey, Hillsboro, OR 97124 (US); YAVATKAR, Raj, Portland, OR 97229 (US); SCHLUESSLER, Travis, Hillsboro, OR 97123 (US); LARSON, Dylan, Portland, OR 97006 (US); ROZAS, Carlos, Portland, OR 97229 (US)
(74) Representative: Beresford, Keith Denis Lewis
(86) International application number: PCT/US2005/008975
(87) International publication number: WO 2005/101794

(56) References cited:
- EP-A- 1 387 522
- WO-A-01/13198
- US-A1- 2003 097 558
- US-A1- 2003 188 179
- US-A1- 2004 039 924
- MARK BAUGHER (CISCO) RAN CANETTI (IBM) LAKSHMINATH DONDETI (NORTEL) FREDRIK LINDHOLM (ERICSSON): "MSEC Group Key Management Architecture <draft-ietf-msec-gkmarch-06.txt>" IETF STANDARD-WORKING-DRAFT, INTERNET ENGINEERING TASK FORCE, IETF, CH, vol. msec, no. 6, 8 September 2003 (2003-09-08), pages 1-35, XP015002805 ISSN: 0000-0004

## Description

### FIELD

Embodiments of the invention relate to cryptography and specifically to sharing of a cryptographic key among multiple clients.

### BACKGROUND

Current cryptographic techniques used for encryption of network traffic employ key distribution protocols capable of getting private keys to the endpoints desiring to engage in secure communication. Alternately, these private keys are distributed to the endpoints in advance of the secure communication by some other means (e.g., delivery service, in person, electronically, etc.). When an endpoint is a personal computing device, the keys are typically stored on a hard drive or other persistent storage device and are accessible to the operating system. This potentially makes the keys accessible to applications running on the operating system. Keys stored in this fashion can be accessed by an attacker who successfully compromises the operating system.

In groups of networked endpoints, when one endpoint is compromised, the lack of security of the keys used for secure communication can potentially lead to compromise of other endpoints on the network. Another potentially more serious problem is the ability of the compromising agent (hacker, virus, etc.) to obtain the keys that may be later used to obtain and decrypt data from the secure communication channels. Thus, compromise of a system may lead to loss of cryptographic keys that could lead to loss of secure communication with those keys.

Other problems associated with the keys associated with secure communication among endpoints in a network are potential difficulties with management and distribution. From a management standpoint, the storing and verifying of keys can become a difficult task as the number of endpoints in a network domain grows. Where a network device, such as a switch or firewall, may be able to manage keys for each client to which it is connected, as the number grows, the limited resources in terms of memory and computational resources of the network device may prevent the device from being able to manage keys for all connected endpoints. From a distribution standpoint, there may be difficulty in provisioning keys and keeping track of who has what keys, when keys should be changed, etc.
US2004/0039924A describes a computer system in which a small security kernel operates in a separate domain from both applications and operating system to facilitate the process of analyzing and establishing trust in the implementation of the security kernel.
Aspects of the present invention are set out in the appended claims.

### BRIEF DESCRIPTION OF THE DRAWINGS

The description of embodiments of the invention includes various illustrations by way of example, and not by way of limitation in the figures and accompanying drawings, in which like reference numerals refer to similar elements.

**Figure 1** is one embodiment of a block diagram of a network system with clients sharing a cryptographic key.

**Figure 2** is one embodiment of a block diagram of a client having a secure storage and an embedded agent.

**Figure 3** is one embodiment of a block diagram of a network endpoint device.

**Figure 4** is one embodiment of a block diagram of elements of a network endpoint device.

**Figure 5** is one embodiment of a flow diagram of accessing a traffic flow with a shared cryptographic key.

**Figure 6** is one embodiment of a block diagram of use of an infrastructure device with endpoints having embedded agents for sharing a cryptographic key.

### DETAILED DESCRIPTION

Methods and apparatuses associated with sharing cryptographic keys among multiple network devices. A shared cryptographic key is provisioned to multiple devices to use in secure communication. Thus, each device will use the same shared key to engage in secure communication. In one embodiment a shared key is provisioned to clients of a virtual network. The private key identifies the client as a trusted device in the network, and enables the device to securely communicate with endpoints in the network.

The shared cryptographic key is managed in a client by an embedded agent. The embedded agent operates independently of a platform on the client host device. A secure storage is used to store the key, and is accessible by the embedded agent, but not the host operating system. The shared key is thus kept secret from the host operating system.

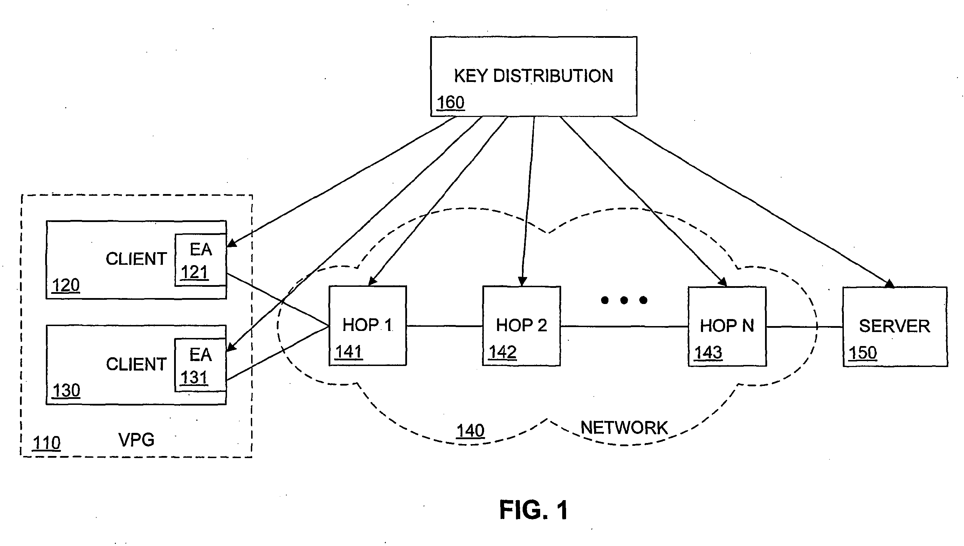

**Figure 1** is one embodiment of a block diagram of a network system with clients sharing a cryptographic key. Virtual private group (VPG) 110 represents endpoints of a network that share a cryptographic key. As illustrated, client 120 and client 130 use a common cryptographic key to encrypt/decrypt secure data for communication over network 140 with server 150.

Clients 120 and 130 include a combination of logic and processor(s). Some of the hardware may include embedded code (firmware) that is stored on and run on the hardware. Also, clients 120 and 130 include user interfaces allowing a user to interact with client 120 and/or client 130. Clients 120 and 130 will include an operating system (OS), that is the main code used to control the flow of execution and instruction on clients 120 and 130. The OS may include e.g., Windows® operating systems from Microsoft® Corporation, Linux, etc. The OS will typically be stored in a persistent storage (e.g., a hard drive) and initialized with boot-up of the client systems. The OS provides user interface to client 120 and/or 130, and allows an environment on which applications may be executed by the systems. The hardware, firmware, and software aspects of a client 120 or 130 are to be understood as being the platform of the client.

Client 120 is shown with embedded agent (EA) 121, and client 130 is shown with EA 131. Embedded agents 121 and 131 represent embedded systems on clients 120 and 130, respectively, that receive and manage the shared key. In one embodiment embedded agents 121 and 131 are systems including embedded processors, a secure key storage, and a cryptographic agent. The cryptographic agent may be implemented in hardware or software running on a device in clients 120 or 130, or a combination of these. The cryptographic agent performs the actual authenticating of data for clients 120 and 130 with the shared key. Authenticating the data with the shared key may include, e.g., hashing the data to authenticate, or sign it, encrypting the data with the key, placing a derivative of the key in a header associated with the data in transmission.

Embedded agents 12 and 131 may be firmware that is run on a processor on the host system that is independent from the main processor or central processing unit (CPU) of the system. In one embodiment aspects of hardware/firmware that make up embedded agents 121 and 131 are integrated into the same die as a chip or chipset of the platform.

Network 140 is intended to represent any type of network, and may include a variety of network hardware (e.g., routers, switches, firewalls, hubs, traffic monitors, etc.). Each hop 141-143 in network 140 represents one such device. Hop 1 141 may be considered to an aggregation point for network 140, because it aggregates the traffic incoming to network 140 from the clients of VPG 110. Note that while three hops are shown in **Figure 1****,** hop 1 141, hop 2 142, and hop N 143, it is to be understood that there may be more of fewer hops that traffic will take across network 140 from VPG 110 to server 150. In one embodiment network 140 merely consists of the communication line between clients 120 and 130 and server 150; thus, there are zero "hops."

Key distribution 160 represents a trusted network entity to store, distribute, and otherwise manage cryptographic keys for the endpoints and devices of network 140. In one embodiment key distribution 160 maintains a public and private key associated with each endpoint on network 140. Key distribution 160 operates to distribute the shared keys to all systems in a domain sharing cryptographic keys, such as VPG 110. For example, VPG 110 may be considered a network domain because it includes a group of clients associated with each other in one topographical view of network 140. A virtual private network (VPN) may be another example of a domain where a cryptographic key may be shared among multiple endpoints.

In one embodiment key distribution 160 periodically updates the shared key. The periodicity of key changing is dependent on factors such as how susceptible to attempted attack or infection the domain is, the number of client systems in the domain, the burden of key management, etc. For example, key changing may occur once per hour, once daily, once weekly, etc. Key distribution 160 may initiate the updating of the shared key by indicating a change to clients 120 and 130. Alternatively, key distribution may update the key in association with a public/private key exchange with the clients.

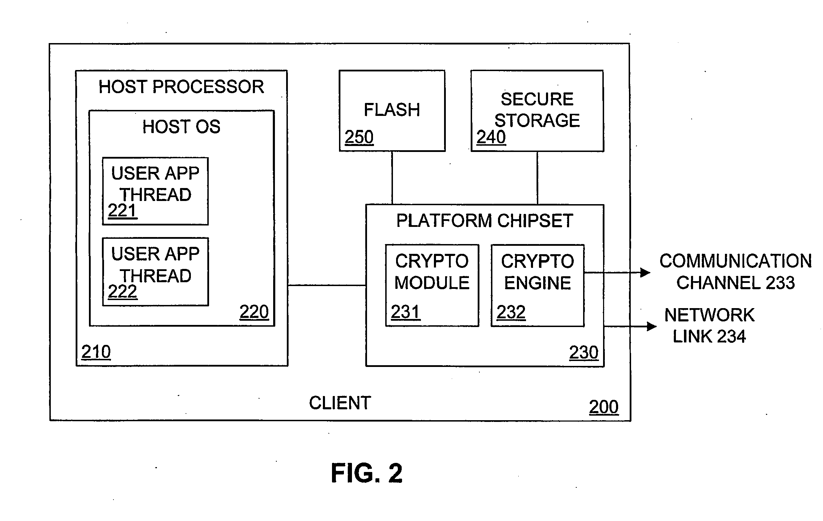

**Figure 2** is one embodiment of a block diagram of a client having a secure storage and an embedded agent. Virtual private group (VPG) client 200 may be a client from a VPG as described in Figure 1. VPG client 200 includes a host processor 210 that is the main processor in the computational platform of client 200. When client 200 is operational, host processor 210 includes host OS 220 that generally controls the environment of client 200. Host OS 220 is shown with user application threads 221-222, which represent applications and/or threads of applications running on host processor 210. There may be fewer or more user application threads than that shown in Figure 2.

Client 200 includes a platform chipset 230. The platform chipset may include memory hubs and/or controllers, input/output (I/O) hubs and/or controllers, memory subsystems, peripheral controllers, etc. Platform chipset 230 is coupled with host processor 210 by means of one or more communication buses. For example, a peripheral component interconnect (PCI) bus is one common bus in a PC. In alternate embodiments, host processor is coupled with platform chipset 230 by means of a proprietary bus.

In one embodiment platform chipset 230 includes cryptographic (crypto) module 231. Cryptographic module 231 represents hardware (embedded chips, logic, etc.) and/or code running on platform 230 that provides cryptographic services for client 200. In one embodiment hardware cryptographic module 231 may include a Galois counter mode encryption module (GCM) to add another layer of encryption on top of enciphered data. An example algorithm that may be used by a GCM includes Advanced Encryption Standard (AES).

Platform chipset 230 includes crypto engine 232, an embedded agent in client 200. Crypto engine 232 represents a cryptographic control system embedded on platform chipset 230. In one embodiment, crypto engine 232 includes an embedded processor or other computational device that has a direct connection to the network, as shown by communication channel 233. Communication channel 233 may represent one or multiple private communication channels. For example, in one embodiment crypto engine 232 represents multiple embedded agents on client 200, each with a private network access. In a case where multiple private communication channels are used, access may be arbitrated.

Communication channel 233 may represent a channel over the same physical line as network link 234, but communication channel 233 is private to crypto engine 232, and is thus transparent to host processor 210. Thus, host processor 210 may have access to network link 234, but not to communication channel 233. In one embodiment communication channel 233 from crypto engine 232 to the network complies with the transport layer security (TLS) or the secure sockets link (SSL) protocols. Other protocols may include Internet Protocol Security (IPsec) and Wired Equivalent Privacy (WEP). Host processor 210 will have network access through network link 234, including secure communication access.

In traditional systems the cryptographic keys used to encipher traffic intended for a secure network connection were accessible to host processor 210. In one embodiment crypto engine 232 provides the keys for enciphering traffic, and provides access to hardware encryption services. In this manner host processor 210 may not have access to the keys, even though host processor can request the encryption services through crypto engine 232.

Client 200 also includes secure storage 240, which is accessible by platform chipset 230, but is independent of, and transparent to host processor 210. Secure storage 240 represents a combination of non-volatile storage (e.g., flash) with logic that prevents unauthorized access to the non-volatile storage. For example, secure storage 240 may be a trusted platform module (TPM).

In one embodiment client 200 may include flash 250. Flash 250 represents a non-volatile storage upon which data related to the security of client 200 may be stored. For example, in one embodiment an image of the host is stored that can be verified to make sure the system has not been compromised. The determination of whether the system has been compromised is performed by an agent on platform chipset 230 that is part of, or works in conjunction with crypto engine 232. In this way crypto engine 232 may determine whether the system is compromised before providing access of a compromised system to network link 234.

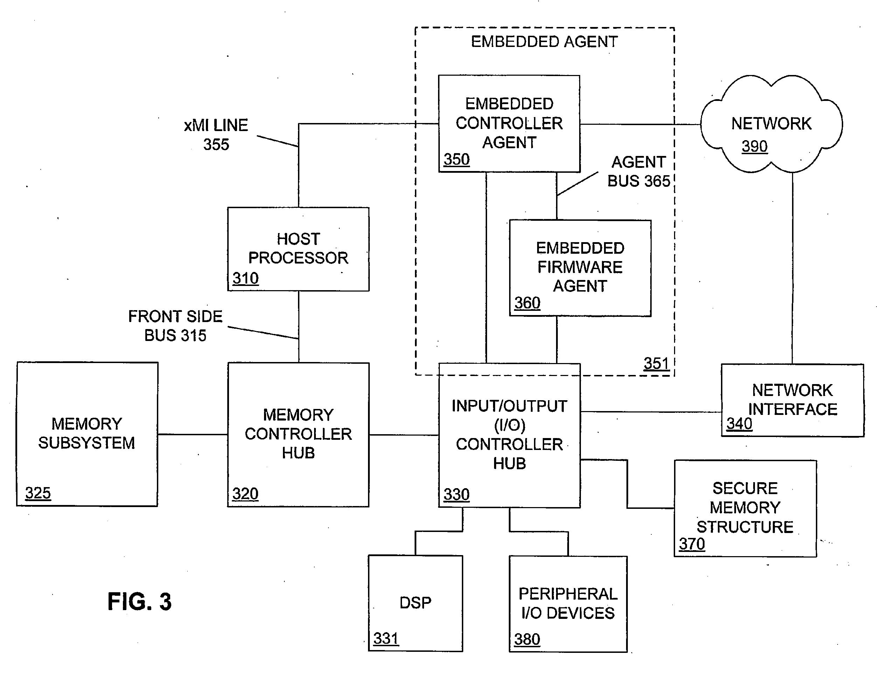

**Figure 3** is one embodiment of a block diagram of a network endpoint device having cooperative embedded agents. The block diagram of Figure 3 is intended to represent a broad category of electronic systems having network interfaces. The electronic system can be, for example, a desktop computer system, a mobile computer system, a server, a personal digital assistant (PDA), a cellular telephone, a set-top box, game console, satellite receiver, etc.

In one embodiment, processor 310 may be coupled to memory controller hub 320 by front side bus 315. While the electronic system of Figure 3 is described as having a single processor, multiple processor embodiments can also be supported. In an alternate embodiment, processor 310 may be coupled with memory controller hub 320 by a shared system bus. Processor 310 can be any type of processor known in the art, for example, a processor from the Pentium® family of processors, the Itanium® family of processors, the Xenon® family of processors, available from Intel Corporation of Santa Clara, California. Other processors can also be used.

Memory controller hub 320 may provide an interface to memory subsystem 325 that can include any type of memory to be used with the electronic system. Memory controller hub 320 may also be coupled with input/output (I/O) controller hub (ICH) 330. In one embodiment, ICH 330 may provide an interface between the system and peripheral I/O devices 380 as well as between the system and network interface 340, which may provide an interface to external network 390. Digital signal processor (DSP) 331 may also be coupled with ICH 330. Network 390 may be any type of network, whether wired or wireless, for example, a local area network or a wide area network.

In one embodiment, ICH 330 may be coupled with secure memory structure 370, which may provide security and/or cryptographic functionality. In one embodiment, secure memory structure 370 may be implemented as a trusted platform module (TPM). Secure memory structure 370 may provide a secure identifier, for example, a cryptographic key in a secure manner to embedded agent 351.

Embedded agent 351 represents an embedded module or modules, whether in hardware or firmware, with a private network connection transparent to host processor 310. In one embodiment embedded agent 351 may be considered to have at least two separate parts, that may be physically or merely logically separate. Embedded agent 351 may physically be separate from ICH 330. In another embodiment, embedded agent 351 is physically integrated with ICH 330.

Embedded controller agent 350 may be coupled with ICH 330 and with network 390. The network connection for embedded controller 350 may be independent of the operation of the system and is independent of an operating system executed by processor 310. In one embodiment, embedded controller agent 350 may include a microcontroller or other type of processing circuitry, memory and interface logic. Embodiments of embedded agent 351 are described in greater detail below.

In one embodiment, embedded controller agent 350 may be coupled with processor 310 via an interrupt interface. For example, embedded controller agent 350 may be coupled with the SMI pin of a Pentium® processor or with the PMI pin of an Itanium® processor (generically, xMI line 355). Other system interrupt signals may be used for other processors.

ICH 330 may also be coupled with embedded firmware agent 360. In one embodiment, embedded firmware agent 360 may be a mechanism that enables executable content in the form of one or more software drivers to be loaded into a management mode of processor 310. Embedded agent 351 may be executed in a combination of hardware and/or software. The software may be transmitted to the system of Figure 3 by means of a machine accessible medium, which includes any mechanism that provides (i.e., stores and/or transmits) information in a form accessible by a machine (e.g., a computer, network device, personal digital assistant, manufacturing tool, any device with a set of one or more processors, etc.). For example, a machine accessible medium includes recordable/non-recordable media (e.g., read only memory (ROM), random access memory (RAM), magnetic disk storage media, optical storage media, flash memory devices; etc.), and electrical, optical, acoustical or other form of propagated signals (e.g., carrier waves, infrared signals, digital signals, etc.), etc.

In one embodiment, embedded controller agent 350 may be coupled with embedded firmware agent 360 via agent bus 365. Agent bus 365 may be a bi-directional private bus between the elements of embedded agent 351. Because one or more aspects of embedded agent 351 may be firmware, agent bus 365 is to be understood as a logical, functional connection between embedded controller agent 350 and embedded firmware agent 360, and not necessarily a physical link. By communicating over agent bus 365, embedded controller agent 350 and embedded firmware agent 360 may be configured to provide manageability and/or security functionality to the system in a secure and convenient manner.

In one embodiment, embedded controller agent 350 may provide an integrity check on the system for security purposes, for example, prior to establishing a secure or trusted connection with a remote device via network 390. Embedded controller agent may perform a virus scan of the system to determine whether communication with the remote device is safe and/or whether support is required from the remote device. Embedded firmware agent 360 may provide an operating system-independent, secure storage for use by embedded controller agent 350 in performing the integrity check.

During operation, embedded controller agent 350 may perform periodic integrity checks to provide enhanced security as compared to a single integrity check. Embedded controller agent 350 can also perform integrity checks prior to communication with remote management devices.

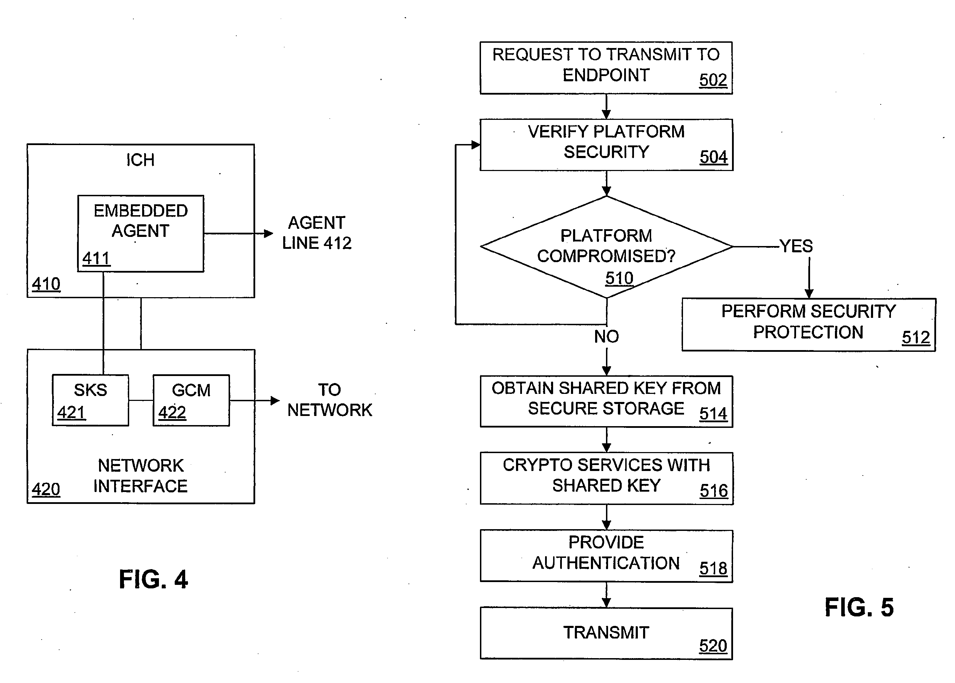

**Figure 4** is one embodiment of a block diagram of elements of a network endpoint device. I/O controller hub (ICH) 410 represents I/O controller hardware on a computing device. ICH 410 may be a chip or chipset with the control logic and interfaces, together with any discrete components that may make up ICH 410. In one embodiment embedded agent 411 is integrated onto the hardware of ICH 410. If ICH 410 is a chipset, embedded agent 411 may be a chip in the chipset and/or firmware no a chip in the chipset. If ICH 410 is a single chip, embedded agent 411 may be a separate circuit integrated onto the ICH 410 chip, and may share I/O pins, or have dedicated I/O pins in the package, or be embedded firmware in a storage of the chip (e.g., read-only memory, flash) that is executed by the ICH 410 chip.

In one embodiment embedded agent 411 includes an embedded firmware agent to participate in the distribution of cryptographic keys, and manage a shared key or keys. A shared key is a key that is shared among multiple clients as part of a virtual group. The ability of the clients in the virtual group to function as a virtual group and use a shared private key depends upon the distributed ability of each client to maintain the security of the shared key.

To maintain the security of the shared key, embedded agent 411 has private network connectivity as represented by agent line 412. A private network connection refers to a connection that is not visible by and/or not accessible to a host operating system. To provide the best security, agent line 412 should be isolated from the central processor of the endpoint device. This is because the central processor may be subject to compromise from attack, and preventing the central processor direct access to agent line 412 will mean that even if an OS running on the central processor is compromised, the security of agent line 412 will likely not be compromised.

To communicate on agent line 412, embedded agent 411 may utilize the shared cryptographic key. Thus, security of each client in the virtual group is ensured by the use of an embedded agent, such as embedded agent 411, that has a private network link inaccessible to the host processor over which the embedded agent may receive and distribute the shared key. The use of the shared key is thus transparent to the host processor, and will not be compromised by an attack on the host processor.

Traditional systems have also been vulnerable in attacks because their cryptographic keys were stored in memory accessible to the OS or user applications. To ensure the security of the shared cryptographic key, embedded agent 411 interfaces with secure key storage (SKS) 421 located on the host platform. In one embodiment, SKS 421 is located on network interface 420. Network interface 420 represents a network card (e.g., network interface card (NIC)), or a network interface circuit integrated onto the hardware/firmware platform of the host computing device. Embedded agent 411 will receive a shared key to be used by each client in the virtual group to identify the client as a member of the virtual group. Embedded agent 411 passes the key to SKS 421 and causes the key to be stored.

In another embodiment, SKS 421 resides on the platform hardware not on the network interface 420. For example, SKS 421 could be a separate chip on a main circuit board. In another example, SKS 421 could be integrated with embedded agent 411, such as by integrating the logic of embedded agent 411 and the memory and logic of SKS 421 on a single integrated circuit or system on a chip.

The key exchange between SKS 421 and embedded agent 411, GCM 422, and/or other hardware in the system will typically be across a private bus, or a bus not generally accessible in a host system. Alternatively, the internal key exchange may take place with encryption across a more generally accessible system bus.

In one embodiment network interface 420 also includes Galois counter mode encryption module (GCM) 422. In alternate embodiments other hardware encryption modules may be used. GCM 422 may be hardware embedded on the system, or software running on an embedded entity on the system. GCM 422 has secure access to SKS 421 as described above. GCM 422 may obtain the shared key from SKS 421 to perform cryptographic services on data intended for secure transmission on the network.

**Figure 5** is one embodiment of a flow diagram of accessing a traffic flow with a shared cryptographic key. A system that participates in a network with shared cryptographic key(s) will typically obtain and store a shared key for use in secure communication. A system according to embodiments of the invention described herein may have a key from boot-up of a host operating system running on the system. The system at some point requests to transmit over a secure communication link to an endpoint on the network, 502. The system includes hardware and/or firmware to provide secure access to and secure storage of a shared symmetric cryptographic key. This includes an embedded agent that maintains the cryptographic key(s).

In one embodiment prior to a transmission in the virtual network, the embedded agent verifies security of the platform, 504. In alternate embodiments the security may be known beforehand from prior verification. In the shared key network, the security is dependent upon each client securing the shared key, and preventing the client computing device from transmitting over a secure link if the client is compromised. Thus, the embedded agent verifies the client platform, including the software running on client, to determine if the client has been compromised by e.g., a virus, worm, hacker attack, etc.

In a system that uses a shared cryptographic key, the sharing of the key presents many advantages as far as management, and integration of the system with other network hardware. However, security of the shared key becomes significantly important. A compromise of a client that results in dissemination of the shared key would destroy trust in the security of all secure communication in the network among clients sharing the key. Thus, in one embodiment the integrity of the system platform is constantly monitored to verify that it is secure. Even if the platform is determined to be free from compromise and the system continues to perform other operations, monitoring of the system integrity may be continued in parallel with the other operations. Note that in parallel does not necessarily infer that a single system element is performing both the monitoring and the other operations. There may be different hardware, software, and/or firmware elements independently and/or concurrently performing the system operations and the monitoring functions.

If the embedded agent determines that the platform has been compromised, 510, the embedded agent may perform security protection operations, 512. Security protection may include, but is not limited to, transmitting on the secure link to a network manager that the client has been compromised, causing execution of security software, causing the client to reboot, preventing the client from transmitting to the network on its network access ports, etc. These operations may be performed in combination as well as individually, or in a sequence.

If the embedded agent determines that the platform has not been compromised, 510, the cryptographic services module (e.g., hardware, software) is provided access to obtain the shared key from a secure storage to perform encryption/decryption of data, 514. The cryptographic services are then provided with the shared key, 516. In the case of hardware encryption, a hardware module may obtain the key directly through a bus to the secured memory storing the shared key. The key is then used to perform the cryptographic services. In the case of software encryption, the software may make a call (e.g., application program interface (API)) to the embedded agent, which provides access to cryptographic services for the software. For example, access to services may be provided through interchange in a read/write area of system memory, and the shared key is not disclosed to the requesting OS or application(s).

To communicate over the virtual network of which the client is a part, the client will provide authentication to identify itself to a verification module on the network, 518. For example, a client may provide authentication to a firewall that isolates the virtual network from the outside. In one embodiment the embedded agent provides authentication with a shared key to the verification module over the secure line the embedded agent has to the network. When authenticated, the client may be allowed to transmit, 520.

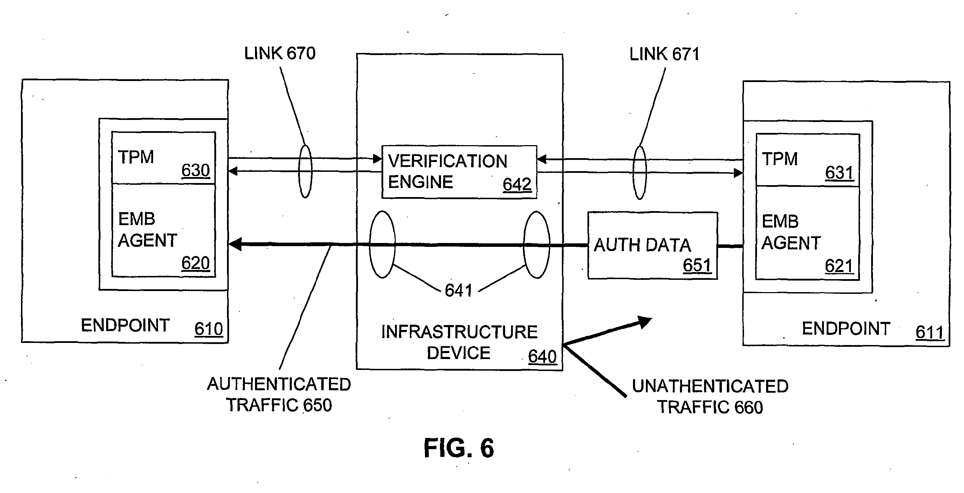

**Figure 6** is one embodiment of a block diagram of use of an infrastructure device with endpoints having embedded agents for sharing a cryptographic key. Endpoints 610-611 desire to engage in secure communication, and will use enciphering/deciphering of data transmitted over a network connecting them. Endpoints 610-611 include embedded agents 620-621, respectively, and secure memory, illustrated as trusted platform modules (TPMs) 630-631, respectively. The operation of embedded agents 620-621 and TPMs 630-631 is according to embodiments of these devices as discussed above.

Endpoints 610-611 are shown interacting through infrastructure device 640. Infrastructure device may be, for example, a firewall, switching device with restricted access services, etc. Infrastructure device 640 provides security by allowing authenticated traffic 650 to pass through infrastructure device 640, and rejecting unauthenticated traffic 660. Authenticated traffic 650 is transmitted through "holes" 641 in infrastructure device 640 opened to authenticated traffic 650.

To determine whether network data should be trusted (650) or untrusted (660), infrastructure device 640 includes verification engine 642. Verification engine 642 communicates through links 670-671 with embedded agents 620-621 of endpoints 610-611, respectively. In one embodiment the verification information is in the fact that authenticated data 651 was hashed or cryptographically altered using the shared key. Also, the verification information may be in the fact that authenticated data 651 includes a header with the shared key or a derivative of the shared key.

Endpoints 610-611 use shared symmetric cryptographic keys for engaging in secure communication. The shared keys are common to endpoints that are part of a virtual network of devices. Embedded agents 620-621 verify the identity of endpoints 610-611, respectively, as belonging to the virtual network by the use of the shared key. When the identity and security of endpoints 610-611 is verified, they may engage in communication. For example, endpoint 611 may transmit authenticated data 651 to endpoint 610.

The infrastructure devices of a network may thus be easily used with groups that share private cryptographic keys. Note that links 670-671, while shown as separate from authenticated data 650 are not necessarily to be understood as referring to separate physical links from endpoints 610-611 to infrastructure device 640. Link 670, which is accessible only to embedded agent 620, may be a private communication channel over the same physical link that carries data on other channels accessible from elements of endpoint 610 that may be subject to compromise. While made in reference to endpoint 610 and secure link 670, the same description applies to endpoint 611 and its associated secure link 671.

Reference herein to "embodiment" means that a particular feature, structure or characteristic described in connection with the described embodiment is included in at least one embodiment of the invention. Thus, the appearance of phrases such as "in one embodiment," or "in alternate an embodiment" may describe various embodiments of the invention, and may not necessarily all refer to the same embodiment. Besides what is described herein, it will be appreciated that various modifications may be made to embodiments of the invention without departing from their scope. Therefore, the illustrations and examples herein should be construed in an illustrative, and not a restrictive sense. The scope of the invention should be measured solely by reference to the claims that follow.

## Claims

1. A method of operating comprising:
provisioning a symmetric cryptographic key across multiple clients through multiple embedded agents, (121,131,351,232,411) each client having one of the embedded agents, the one embedded agent comprising an embedded computational device adapted to store the symmetric cryptographic key in a storage (240) accessible to the embedded agent and not accessible to a host processor (220) on the client;
providing access to an encrypted traffic flow to or from a network (140) if the client is authenticated with the key; and
wherein provisioning the key through the embedded agents further comprises provisioning the key through the one embedded agent having network access via a network link not accessible to a host operating system, OS, (220) running on the client.

2. A method according to claim 1, wherein providing access to the traffic flow if the client is authenticated comprises the embedded agent authenticating the client over the network line.

3. A method according to claim 1, wherein providing access to the traffic flow further comprises providing multiple clients access with the key to nodes in the network, the nodes in the network decrypting the traffic flow and subsequently encrypting the traffic flow to transmit the traffic to a next node in the network.

4. A method according to claim 1, further comprising updating at a client the symmetric cryptographic key provisioned across the multiple clients through a public and private key exchange with a public and private key associated with the client.

5. A method according to claim 1, wherein providing access if the client is authenticated further comprises:
the embedded agent verifying that a platform associated with the client is not compromised; and
the embedded agent providing the key and an assertion that the client is not compromised to a verification entity (160) on the network.

6. A method according to claim 5, further comprising the embedded agent indicating to a remote network device (160) if the client is compromised.

7. A method according to claim 5, further comprising the embedded agent foreclosing network access to the client if the client is compromised.

8. A method according to claim 1, further comprising the embedded agent performing cryptographic functions on data with the key to authenticate data with the key.

9. A method according to claim 1, further comprising the embedded agent including a derivative of the key in a header of data to be transmitted to authenticate the data with the key.

10. An apparatus comprising: a host platform on the apparatus including a host processor (220);
a secure memory (240) not visible to applications (221,222) and an operating system OS, running on the host platform;
an embedded computational device (232) communicatively coupled with the host platform, the embedded device having network access via a network link (234) not accessible to the host OS, the embedded device being adapted to manage a cryptographic key shared among the apparatus and network endpoints to be used to communicate with a server (150) over a network (140), to receive the cryptographic key on the link and authenticate the apparatus, and to store the cryptographic key in the secure memory.

11. An apparatus according to claim 10, wherein the embedded device comprises a network connection not accessible by the host platform, the link complying with the transport layer security, TLS, protocol.

12. An apparatus according to claim 10, wherein the embedded device comprises to have a network connection not accessible by the host platform, the link complying with the secure sockets layer, SSL, protocol.

13. An apparatus according to claim 10, wherein the embedded device as adapted to verify the identity of the apparatus to a network switching device with the key, the key being also to be used by the network endpoints to verify their respective identities to the network switching device, and by the network switching device to decrypt encrypted traffic from the apparatus and the network endpoints.

14. An apparatus according to claim 10, wherein the embedded device is adapted to hash traffic to be transmitted with the key.

15. An apparatus according to claim 10, wherein the embedded device is adapted to perform cryptographic services with the key on traffic to be transmitted.

16. An apparatus according to claim 10, wherein the embedded device is adapted to include a derivative of the key in a header of traffic to be transmitted.

17. An apparatus according to claim 10, further comprising a second embedded computational device, the second embedded device being integrated on the host platform, and adapted to verify the security of the host platform.

18. An apparatus according to claim 16, wherein the first embedded device is adapted not to authenticate the apparatus if a second embedded device determines the host platform is not secure.

19. An apparatus according to claim 16, further comprising a bi-directional private bus between a first and a second embedded device.

20. An apparatus according to claim 10, further comprising a counter mode hardware cryptographical module on the host platform to encipher traffic with the cryptographic key and further provide a counter mode enciphering of the enciphered traffic.

21. An apparatus as claimed in claim 10, further comprising:
a digital signal processor, DSP, (331) coupled with the host platform; and
an embedded chipset (230) including a secure key storage module adapted to perform cryptographic key management of the shared cryptographic key with the secure key storage module and a private communication channel accessible to the chipset and not the host platform, and adapted to access the image of the host platform on the flash to determine the integrity of the host platform, the shared cryptographic key to be used by the host platform to encipher data and other networked devices within a virtual private network.

22. An apparatus according to claim 21, wherein the embedded chipset is adapted to perform cryptographic key distribution with the private communication channel complying with the transport layer security, TLS, protocol.

23. An apparatus according to claim 21, wherein the embedded chipset comprises an embedded controller agent (350) and an embedded firmware agent (360), the firmware agent being adapted to determine the integrity of the host platform, and the controller agent being adapted to operate the private communication channel and manage access by the host platform to secure network connections.

24. An apparatus according to claim 23, further comprising a bi-directional private communication (365) path between a first and a second embedde device to allow the devices to interoperate outside the awareness of the host platform.

25. An apparatus according to claim 21, further comprising the embedded chipset being adapted to hash traffic to be transmitted with the key to authenticate the system to one of the other networked devices.

26. An apparatus according to claim 21, further comprising the embedded chipset being adapted to perform cryptographic services with the key on traffic to be transmitted to authenticate the system to one of the other networked devices.

27. An apparatus according to claim 21, further comprising the embedded chipset being adapted to include a derivative of the key in a header of traffic to be transmitted to authenticate the system to one of the other networked devices.

28. A machine accessible medium having software, which, when to executed on a machine, performs all the steps of a method as claimed in any one of claims 1 to 9.

## Patentansprüche

1. Betriebsverfahren, in dem
ein symmetrischer Kryptographieschlüssel durch mehrere eingebettete Agenten (121, 131, 351, 232, 411) auf mehrere Clients verteilt wird, wobei jeder Client einen der eingebetteten Agenten aufweist, der eine eingebettete Rechnervorrichtung aufweist, die zum Speichern des symmetrischen Kryptographieschüssels in einem Speicher (240) ausgelegt ist, auf den der eingebettete Agent, nicht aber ein Hostprozessor (220) in dem Client Zugriff hat,
Zugriff auf einen verschlüsselten Verkehrsfluß zu oder von einem Netz (140) gegeben wird, falls der Client mit dem Schlüssel authentifiziert wird, und
beim Verteilen des Schlüssels durch die eingebetteten Agenten ferner der Schlüssel durch den einen eingebetteten Agent verteilt wird, der Netzzugriff über eine Netzverknüpfung hat, auf die ein Hostbetriebssystem, OS, (220), das auf dem Client läuft, keinen Zugriff hat.

2. Verfahren nach Anspruch 1, wobei beim Zugriffgeben auf den Verkehrsfluß, falls der Client authentifiziert wird, der eingebettete Agent den Client über die Netzleitung authentifiziert.

3. Verfahren nach Anspruch 1, wobei beim Zugriffgeben auf den Verkehrsfluß ferner mehreren Clients mit dem Schlüssel Zugriff auf Knoten in dem Netz gegeben wird, wobei die Knoten in dem Netz den Verkehrsfluß entschlüsseln und anschließend verschlüsseln, um den Verkehr zu einem Netzknoten in dem Netz zu übertragen.

4. Verfahren nach Anspruch 1, wobei ferner bei einem Client der auf die mehreren Clients verteilte symmetrische Kryptographieschlüssel durch einen öffentlichen und privaten Schlüsselaustausch mit einem öffentlichen und privaten Schlüssel aktualisiert wird, die dem Client zugeordnet sind.

5. Verfahren nach Anspruch 1, wobei beim Zugriffgeben, falls der Client authentifiziert wird, ferner
der eingebettete Agent verifiziert, daß eine dem Client zugeordnete Plattform nicht kompromittiert ist, und
der eingebettete Agent den Schlüssel und eine Zusicherung, daß der Client nicht kompromittiert ist, an eine Verifikationseinheit (160) in dem Netz liefert.

6. Verfahren nach Anspruch 5, wobei ferner der eingebettete Agent auf eine entfernte Netzvorrichtung (160) verweist, falls der Client kompromittiert ist.

7. Verfahren nach Anspruch 5, wobei ferner der eingebettete Agent den Netzzugriff für den Client verweigert, falls der Client kompromittiert ist.

8. Verfahren nach Anspruch 1, wobei ferner der eingebettete Agent Kryptographiefunktionen mit dem Schlüssel an Daten durchführt, um die Daten mit dem Schlüssel zu authentifizieren.

9. Verfahren nach Anspruch 1, wobei ferner der eingebettete Agent ein Derivat des Schlüssels in einen Datenkopfteil einschließt, der zur Authentifizierung der Daten mit dem Schlüssel übertragen wird.

10. Gerät mit
einer Hostplattform in dem Gerät, die einen Hostprozessor (220) aufweist,
einem Sicherheitsspeicher (240), der für Anwendungen (221, 222) und ein auf der Hostplattform laufendes Betriebssystem OS nicht sichtbar ist,
einer eingebetteten Rechnervorrichtung (232), die kommunikativ mit der Hostplattform verbunden ist, und die über eine Netzverknüpfung (234), auf die das Host-OS keinen Zugriff hat, Netzzugriff hat, wobei die eingebettete Vorrichtung dazu ausgelegt ist, einen Kryptographieschlüssel zu verwalten, der zwischen dem Gerät und Netzendpunkten geteilt wird, die zur Kommunikation mit einem Server (150) über ein Netz (140) zu verwenden sind, um den Kryptographieschlüssel an der Verknüpfung zu empfangen und das Gerät zu authentifizieren, und um den Kryptographieschlüssel in dem Sicherheitsspeicher zu speichern.

11. Gerät nach Anspruch 10, wobei die eingebettete Vorrichtung eine Netzverbindung aufweist, auf die die Hostplattform keinen Zugriff hat, wobei die Verknüpfung dem Transport-Layer-Sicherheitsprotokoll, TLS, entspricht.

12. Gerät nach Anspruch 10, wobei die eingebettete Vorrichtung eine Netzverbindung hat, auf die die Hostplattform keinen Zugriff hat, wobei die Verknüpfung dem Sicherheits-Socket-Layerprotokoll, SSL, entspricht.

13. Gerät nach Anspruch 10, wobei die eingebettete Vorrichtung dazu ausgelegt ist, die Identität des Geräts mit dem Schlüssel für eine Netzschaltvorrichtung zu verifizieren, wobei der Schlüssel auch durch die Netzendpunkte zu verwenden ist, um deren jeweilige Identitäten für die Netzschaltvorrichtung zu verifizieren, sowie durch die Netzschaltvorrichtung zu verwenden ist, um verschlüsselten Verkehr von dem Gerät und den Netzendpunkten zu entschlüsseln.

14. Gerät nach Anspruch 10, wobei die eingebettete Vorrichtung dazu ausgelegt ist, zu übertragenden Verkehr mit dem Schlüssel zu hashen.

15. Gerät nach Anspruch 10, wobei die eingebettete Vorrichtung dazu ausgelegt ist, Kryptographiedienste mit dem Schlüssel an dem zu übertragenden Verkehr durchzuführen.

16. Gerät nach Anspruch 10, wobei die eingebettete Vorrichtung dazu ausgelegt ist, ein Derivat des Schlüssels in einem Kopfteil des zu übertragenden Verkehrs einzuschließen.

17. Gerät nach Anspruch 10, ferner mit einer zweiten eingebetteten Rechnervorrichtung, die in die Hostplattform integriert und dazu ausgelegt ist, die Sicherheit der Hostplattform zu verifizieren.

18. Gerät nach Anspruch 16, wobei die erste eingebettete Vorrichtung dazu ausgelegt ist, das Gerät nicht zu authentifizieren, wenn eine zweite eingebettete Vorrichtung feststellt, daß die Hostplattform nicht sicher ist.

19. Gerät nach Anspruch 16, ferner mit einem bidirektionalen Privatbus zwischen einer ersten und einer zweiten eingebetteten Vorrichtung.

20. Gerät nach Anspruch 10, ferner mit einem Zählmodus-Hardware-Kryptographiemodul in der Hostplattform, um Verkehr mit dem Kryptographieschlüssel zu verschlüsseln und ferner eine Zählmodusverschlüsselung des verschlüsselten Verkehrs bereitzustellen.

21. Gerät nach Anspruch 10, ferner mit einem digitalen Signalprozessor, DSP, (331), der an die Hostplattform angeschlossen ist, und
einem eingebetteten Chipset (230), das ein Sicherheitsschlüssel-Speichermodul aufweist, das dazu ausgelegt ist, Kryptographieschlüsselverwaltung des geteilten Kryptographieschlüssels mit dem Sicherheitsschlüssel-Speichermodul und einem privaten Kommunikationskanal durchzuführen, auf den das Chipset, nicht aber die Hostplattform Zugriff hat, und das dazu ausgelegt ist, blitzartig auf das Bild der Hostplattform zuzugreifen, um die Integrität der Hostplattform festzustellen, wobei der geteilte Kryptographieschlüssel durch die Hostplattform zu verwenden ist, um Daten und andere Netzvorrichtungen innerhalb eines virtuellen Privatnetzes zu verschlüsseln.

22. Gerät nach Anspruch 21, wobei das eingebettete Chipset dazu ausgelegt ist, Kryptographieschlüsselverteilung mit dem privaten Kommunikationskanal durchzuführen, der dem Transport-Layer-Sicherheitsprotokoll, TLS, entspricht.

23. Gerät nach Anspruch 21, wobei das eingebettete Chipset einen eingebetteten Steueragenten (350) und einen eingebetteten Firmenproduktagenten (360) aufweist, wobei der eingebettete Firmenproduktagent dazu ausgelegt ist, die Integrität der Hostplattform festzustellen, und der Steueragent dazu ausgelegt ist, den privaten Kommunikationskanal zu betreiben und den Zugriff durch die Hostplattform zu sicheren Netzverbindungen zu verwalten.

24. Gerät nach Anspruch 23, ferner mit einem bidirektionalen privaten Kommunikationspfad (365) zwischen einer ersten und einer zweiten eingebetteten Vorrichtung, um den Vorrichtungen zu erlauben, untereinander ohne Wahrnehmung durch die Hostplattform zu operieren.

25. Gerät nach Anspruch 21, wobei ferner das eingebettete Chipset dazu ausgelegt ist, zu übertragenden Verkehr mit dem Schlüssel zu hashen, um das System für eine der anderen vernetzten Vorrichtungen zu authentifizieren.

26. Gerät nach Anspruch 21, wobei das eingebettete Chipset ferner dazu ausgelegt ist, Kryptographiedienste mit dem Schlüssel an zu übertragendem Verkehr durchzuführen, um das System für eine der anderen vernetzten Vorrichtungen zu authentifizieren.

27. Gerät nach Anspruch 21, wobei das eingebettete Chipset ferner dazu ausgelegt ist, ein Derivat des Schlüssels in einem Kopfteil des zu übertragenden Verkehrs einzuschließen, um das System für eine der anderen vernetzten Vorrichtungen zu authentifizieren.

28. Maschinenlesbares Medium mit Software, die bei Ausführung auf einer Maschine alle Schritte eines Verfahrens gemäß einem der Ansprüche 1 bis 9 durchführt.

## Revendications

1. Procédé d'exploitation, comprenant :
le déploiement d'une clé cryptographique symétrique parmi de multiples clients par l'intermédiaire de multiples agents embarqués (121, 131, 351, 232, 411), chaque client ayant l'un des agents embarqués, ledit un agent embarqué comprenant un dispositif informatique embarqué apte à stocker la clé cryptographique symétrique dans une mémoire (240) accessible à l'agent embarqué et non accessible au processeur hôte (220) sur le client ;
la fourniture d'un accès à un flux de trafic crypté vers ou en provenance d'un réseau (140) si le client est authentifié avec la clé ; et
dans lequel le déploiement de la clé par l'intermédiaire des agents embarqués comprend en outre le déploiement de la clé par l'intermédiaire dudit un agent embarqué ayant accès au réseau via une liaison réseau non accessible à un système d'exploitation, ou OS, hôte (220) s'exécutant sur le client.

2. Procédé selon la revendication 1, dans lequel la fourniture d'un accès au flux de trafic si le client est authentifié, comprend l'authentification par l'agent embarqué du client sur la ligne réseau.

3. Procédé selon la revendication 1, dans lequel la fourniture d'un accès au flux de trafic comprend en outre la fourniture à de multiples clients d'un accès à des noeuds du réseau en utilisant la clé, les noeuds du réseau décryptant le flux de trafic et cryptant ensuite le flux de trafic pour transmettre le trafic à un noeud suivant du réseau.

4. Procédé selon la revendication 1, comprenant en outre la mise à jour sur un client de la clé cryptographique symétrique déployée parmi les multiples clients par l'intermédiaire d'un échange de clés publique et privée en utilisant des clés publique et privée associées au client.

5. Procédé selon la revendication 1, dans lequel la fourniture d'un accès si le client est authentifié comprend en outre :
la vérification par l'agent embarqué du fait qu'une plate-forme associée au client n'est pas compromise ; et
la fourniture par l'agent embarqué de la clé et d'une affirmation, selon laquelle le client n'est pas compromis, à une entité de vérification (160) sur le réseau.

6. Procédé selon la revendication 5, comprenant en outre la fourniture par l'agent embarqué à un dispositif de réseau distant (160) d'une indication indiquant si le client est compromis.

7. Procédé selon la revendication 5, comprenant en outre l'interdiction par l'agent embarqué de l'accès du client au réseau si le client est compromis.

8. Procédé selon la revendication 1, comprenant en outre l'exécution par l'agent embarqué de fonctions cryptographiques sur des données en utilisant la clé pour authentifier les données en utilisant la clé.

9. Procédé selon la revendication 1, comprenant en outre l'inclusion par l'agent embarqué d'une dérivée de la clé dans l'en-tête des données à transmettre afin d'authentifier les données en utilisant la clé.

10. Appareil comprenant :
une plate-forme hôte sur l'appareil comprenant un processeur hôte (220) ;
une mémoire sécurisée (240) non visible des applications (221, 222) et d'un système d'exploitation OS s'exécutant sur la plate-forme hôte ;
un dispositif informatique embarqué (232) relié de façon à pouvoir communiquer avec la plate-forme hôte, le dispositif embarqué disposant d'un accès au réseau via une liaison réseau (234) non accessible à l'OS hôte, le dispositif embarqué étant apte à gérer une clé cryptographique partagée entre l'appareil et des points d'extrémité du réseau devant être utilisés pour communiquer avec un serveur (150) par l'intermédiaire d'un réseau (140), afin de recevoir la clé cryptographique sur la liaison et d'authentifier l'appareil, et pour stocker la clé cryptographique dans la mémoire sécurisée.

11. Appareil selon la revendication 10, dans lequel le dispositif embarqué comprend une connexion réseau non accessible à la plate-forme hôte, la liaison étant conforme au protocole de sécurité de la couche de transport, TLS (Transport Layer Security).

12. Appareil selon la revendication 10, dans lequel le dispositif embarqué est réalisé de façon à avoir une connexion réseau non accessible à la plate-forme hôte, la liaison étant conforme au protocole de couche de sécurité, SSL (Secure Sockets Layer).

13. Appareil selon la revendication 10, dans lequel le dispositif embarqué est apte à vérifier l'identité de l'appareil vis-à-vis d'un dispositif de commutation du réseau en utilisant la clé, la clé devant également être utilisée par les points d'extrémité du réseau pour vérifier leurs identités respectives vis-à-vis du dispositif de commutation du réseau, et par le dispositif de commutation du réseau pour décrypter le trafic crypté provenant de l'appareil et des points d'extrémité du réseau.

14. Appareil selon la revendication 10, dans lequel le dispositif embarqué est apte à hacher le trafic devant être transmis en utilisant la clé.

15. Appareil selon la revendication 10, dans lequel le dispositif embarqué est apte à fournir des services cryptographiques en utilisant la clé sur le trafic devant être transmis.

16. Appareil selon la revendication 10, dans lequel le dispositif embarqué est apte à inclure une dérivée de la clé dans un en-tête du trafic devant être transmis.

17. Appareil selon la revendication 10, comprenant en outre un deuxième dispositif informatique embarqué, le deuxième dispositif embarqué étant intégré à la plate-forme hôte et étant apte à vérifier la sécurité de la plate-forme hôte.

18. Appareil selon la revendication 16, dans lequel le premier dispositif embarqué est apte à ne pas authentifier l'appareil si un deuxième dispositif embarqué détermine que la plate-forme hôte n'est pas sécurisée.

19. Appareil selon la revendication 16, comprenant en outre un bus privé bidirectionnel entre des premier et deuxième dispositifs embarqués.

20. Appareil selon la revendication 10, comprenant en outre un module cryptographique matériel en mode compteur sur la plate-forme hôte pour chiffrer le trafic en utilisant la clé cryptographique et pour permettre en outre un chiffrage en mode compteur du trafic chiffré.

21. Appareil selon la revendication 10, comprenant en outre :
un processeur numérique de signal, DSP (Digital Signal Processor) (331), relié à la plate-forme hôte ; et
un jeu de puces embarqué (230) comportant un module de stockage de clé sécurisé apte à effectuer la gestion de clé cryptographique pour la clé cryptographique partagée avec le module de stockage de clé sécurisé et un canal de communication privé accessible au jeu de puces mais pas à la plate-forme hôte, et apte à accéder à l'image de la plate-forme hôte sur la mémoire flash pour déterminer l'intégrité de la plate-forme hôte, la clé cryptographique partagée devant être utilisée par la plate-forme hôte pour chiffrer des données et d'autres dispositifs en réseau au sein du réseau privé virtuel.

22. Appareil selon la revendication 21, dans lequel le jeu de puces embarqué est apte à effectuer une distribution de clés cryptographiques en utilisant le canal de communication privé en conformité avec le protocole de sécurité de la couche de transport, TLS.

23. Appareil selon la revendication 21, dans lequel le jeu de puces embarqué comprend un agent contrôleur embarqué (350) et un agent microcodé embarqué (360), l'agent microcodé étant apte à déterminer l'intégrité de la plate-forme hôte, et l'agent contrôleur étant apte à exploiter le canal de communication privé et à gérer l'accès de la plate-forme hôte aux connexions réseau sécurisées.

24. Appareil selon la revendication 23, comprenant en outre un trajet de communication privé bidirectionnel (365) entre des premier et deuxième dispositifs embarqués pour permettre un interfonctionnement entre les dispositifs sans avoir connaissance de la plate-forme hôte.

25. Appareil selon la revendication 21, comprenant en outre le fait que le jeu de puces embarqué est apte à hacher le trafic devant être transmis en utilisant la clé pour authentifier le système vis-à-vis de l'un des autres dispositifs en réseau.

26. Appareil selon la revendication 21, comprenant en outre le fait que le jeu de puces embarqué est apte à fournir des services cryptographiques en utilisant la clé sur le trafic devant être transmis pour authentifier le système vis-à-vis de l'un des autres dispositifs en réseau.

27. Appareil selon la revendication 21, comprenant en outre le fait que le jeu de puces embarqué est apte à inclure une dérivée de la clé dans l'en-tête du trafic devant être transmis pour authentifier le système vis-à-vis de l'un des autres dispositifs en réseau.

28. Support accessible à une machine contenant un logiciel qui, lorsqu'il est exécuté sur une machine, met en oeuvre toutes les étapes d'un procédé selon l'une quelconque des revendications 1 à 9.
